# EUROPEAN PATENT APPLICATION

(11) **EP 4 131 091 A1**
(43) Date of publication of application: **08.02.2023**
(21) Application number: 22175120.9
(22) Date of filing: 24.05.2022
(51) Int. Cl.: G06N 20/00, G06N 5/04

(54) **EXPLANATORY INFORMATION OUTPUT PROGRAM, EXPLANATORY INFORMATION OUTPUT METHOD, AND INFORMATION PROCESSING DEVICE**

(30) Priority: 06.08.2021 JP 2021129880
(71) Applicant: FUJITSU LIMITED, Kawasaki-shi, Kanagawa 211-8588 (JP)
(72) Inventor: Tokuyasu, Shinya, Minato-ku, Tokyo, 105-7123 (JP); Nakashima, Satoshi, Kawasaki-shi, Kanagawa, 211-8588 (JP)
(74) Representative: Hoffmann Eitle

(57) **Abstract**

An explanatory information output program for causing a computer to execute processing includes obtaining a contribution of each of a plurality of factors to an output result of a machine learning model in a case of inputting each of a plurality of pieces of data, each of the plurality of factors being included in each of the plurality of pieces of data; clustering the plurality of pieces of data based on the contribution of each of the plurality of factors to generate a plurality of groups of factors; and outputting explanatory information that includes a diagram representing magnitude of the contribution of each of the plurality of factors to the output result in a case of inputting data included in the group for each of the plurality of groups.

## Description

### FIELD

The embodiment discussed herein is related to an explanatory information output program, an explanatory information output method, and an information processing device.

### BACKGROUND

In recent years, machine learning models generated by machine learning (artificial Intelligence (AI)) have been used. The machine learning models have one aspect that it is basically difficult to interpret due to the nature of the mechanism, and explainable AI (XAI) is used to deal with it. XAI is a technique that outputs a factor contribution for each feature input to a machine learning model and presents to humans which feature is led to a prediction result or an estimation result.

Japanese Laid-open Patent Publication No. 2020-24542, Japanese Laid-open Patent Publication No. 2020-135066, U.S. Patent Application Publication No. 2021/27191, and U.S. Patent Application Publication No. 2018/322955 are disclosed as related art.

### SUMMARY

### [TECHNICAL PROBLEM]

However, with the above technique, it is possible to calculate the factor contribution as explanatory information for the prediction result but it is difficult to indicate an overall tendency.

For example, XAI outputs the factor contribution for each AI prediction result (instance), so a user individually checks the relationship between each prediction result and the factor contribution in order to grasp an overall tendency. As a result, in a case where the user takes measures against the prediction result on the basis of the factor contribution, it takes time and it is difficult to take optimum measures against the prediction result.

In one aspect, an object is to provide an explanatory information output program, an explanatory information output method, and an information processing device capable of indicating an overall tendency for output results of a machine learning model.

### [SOLUTION TO PROBLEM]

According to an aspect of the embodiments, an explanatory information output program for causing a computer to execute processing includes obtaining a contribution of each of a plurality of factors to an output result of a machine learning model in a case of inputting each of a plurality of pieces of data, each of the plurality of factors being included in each of the plurality of pieces of data; clustering the plurality of pieces of data based on the contribution of each of the plurality of factors to generate a plurality of groups of factors; and outputting explanatory information that includes a diagram representing magnitude of the contribution of each of the plurality of factors to the output result in a case of inputting data included in the group for each of the plurality of groups.

### [ADVANTAGEOUS EFFECTS OF INVENTION]

According to one embodiment, it is possible to indicate an overall tendency for output results of a machine learning model.

### BRIEF DESCRIPTION OF DRAWINGS

FIG. 1 is a diagram for describing an information processing device according to a first embodiment;
FIG. 2 is a functional block diagram illustrating a functional configuration of the information processing device according to the first embodiment;
FIG. 3 is a diagram illustrating an example of information stored in a training data DB;
FIG. 4 is a diagram illustrating an example of information stored in an input data DB;
FIG. 5 is a diagram for describing acquisition of a factor contribution;
FIG. 6 is a diagram for describing calculation of weights of factors;
FIG. 7A and FIG. 7B are diagrams for describing a display example of explanatory information;
FIG. 8A and FIG. 8B are diagrams for describing a display example of explanatory information;
FIG. 9 is a flowchart illustrating a flow of processing according to the first embodiment; and
FIG. 10 is a diagram for describing a hardware configuration example.

### DESCRIPTION OF EMBODIMENTS

Hereinafter, embodiments of an explanatory information output program, an explanatory information output method, and an information processing device disclosed in the present application will be described in detail with reference to the drawings. Note that the embodiments do not limit the present application. Furthermore, the embodiments may be appropriately combined with each other within a range without inconsistency.

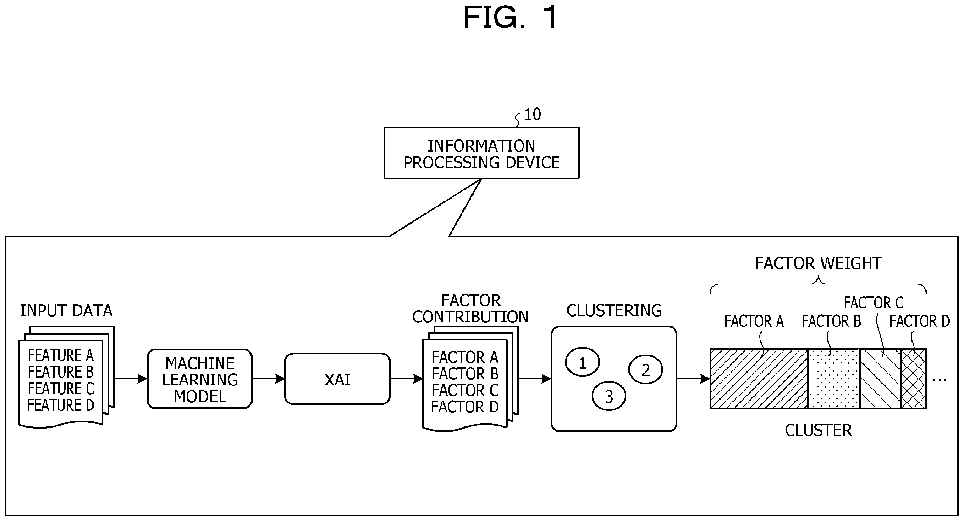

FIG. 1 is a diagram for describing an information processing device 10 according to a first embodiment. The information processing device 10 illustrated in FIG. 1 is an example of a computer that converts and outputs a prediction result of a machine learning model into explanatory information that the user can visually understand, using XAI to which an algorithm such as local interpretable model-agnostic explanations (LIME) is applied.

For example, the information processing device 10 acquires a contribution of each of a plurality of factors included in each of a plurality of data to an output result of the machine learning model in a case of inputting each of the plurality of data. The information processing device 10 clusters the plurality of data on the basis of the contribution of each of the plurality of factors. The information processing device 10 outputs, for each of a plurality of groups generated by the clustering, the explanatory information including a diagram representing magnitude of the contribution of each of the plurality of factors to the output result in a case of inputting the data included in the group.

For example, as illustrated in FIG. 1, the information processing device 10 inputs pieces of input data having a feature A, a feature B, a feature C, and a feature D into a machine learning model, and acquires prediction results. Then, the information processing device 10 acquires factor contributions of a factor A, a factor B, a factor C, and a factor D contained in the pieces of input data, using the input data, the prediction results, and XAI. Here, the factor contribution is information indicating the degree of contribution of each feature to the prediction result. The factor A indicates the contribution of the feature A, the factor B indicates the contribution of the feature B, the factor C indicates the contribution of the feature C, and the factor D indicates the contribution of the feature D.

Next, the information processing device 10 clusters the factor contributions corresponding to the pieces of input data. For example, the information processing device 10 specifies pieces of input data using vectors of the factor A, the factor B, the factor C, and the factor D in a feature space having a feature a, a feature b, a feature c, and a feature d as respective dimensions (four dimensions), and clusters the pieces of input data.

Thereafter, the information processing device 10 sorts and displays proportions of factors to the entire cluster by area ratio, for each cluster. In this way, the information processing device 10 clusters the prediction results according to reasons (factor vectors) for the outputs of the machine learning model and displays the prediction results in a format such as the area ratio that is visually easy to understand, and thus can illustrate an overall tendency for the output results of the machine learning model.

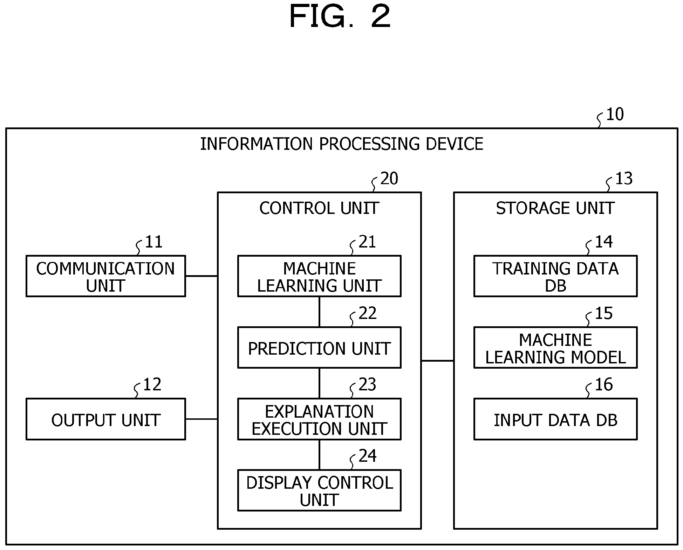

FIG. 2 is a functional block diagram illustrating a functional configuration of the information processing device 10 according to the first embodiment. As illustrated in FIG. 2, the information processing device 10 includes a communication unit 11, an output unit 12, a storage unit 13, and a control unit 20.

The communication unit 11 controls communication with another device. For example, the communication unit 11 receives an instruction to start processing and data (input data) to be determined from an administrator terminal or the like, and transmits a processing result by the control unit 20 to the administrator terminal.

The output unit 12 displays and outputs various types of information. For example, the output unit 12 outputs and displays the output result of a machine learning model 15 to be described below, the explanatory information generated by the control unit 20, and the like.

The storage unit 13 stores various types of data, programs executed by the control unit 20, or the like. The storage unit 13 stores training data DB 14, the machine learning model 15, and an input data DB 16.

The training data DB 14 is a database that stores training data to be used for machine learning of the machine learning model 15. For example, the training data DB 14 stores a set of training data having a plurality of features and correct answer information (labels). As an example, training data to be used by a carrier to generate a machine learning model for determining a possibility of cancellation from contract information will be described.

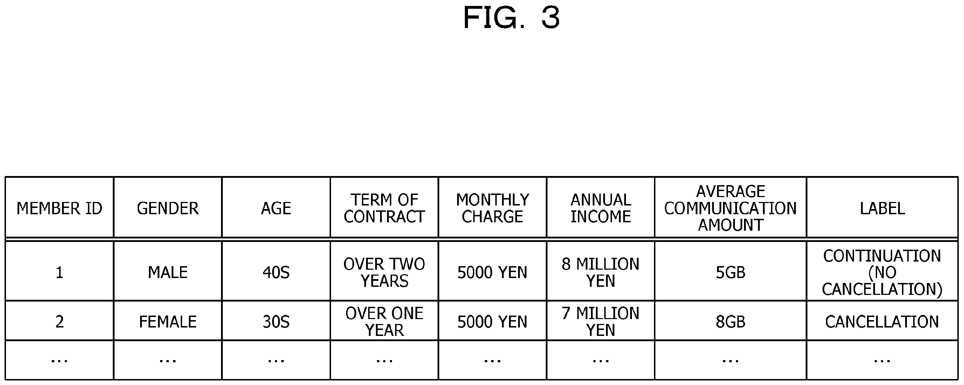

FIG. 3 is a diagram illustrating an example of information stored in the training data DB 14. As illustrated in FIG. 3, each training data stored in the training data DB 14 has "member ID, gender, age, term of contract, monthly charge, annual income, average communication amount, label". Here, each of the "gender, age, term of contract, monthly charge, annual income, and average communication amount" is a feature, and "label" is correct answer information. Note that an identifier of a member is set in the "member ID", the gender of the member is set in the "gender", the age of the member is set in the "age", and a term of contract of the member is set in the "term of contract". A monthly fee contracted by the member is set in the "monthly charge", the annual income of the member is set in the "annual income", an average value of data communication amounts used by the member in one month is set in the "average communication amount", and the presence or absence of cancellation is set in the "label".

In the example of FIG. 3, for the member with member ID = 1, "a male, 40s, the contract over 2 years, the monthly charge of 8000 yen, the annual income of 8 million yen, using an average of 5 gigabyte (GB) of communication amount" is set, and this member being "continuing" the contract without cancellation is set.

The machine learning model 15 is a machine learning model generated using the training data stored in the training data DB 14 so as to output determination results according to the input data having a plurality of features. Describing the above-described carrier as an example, the machine learning model 15 outputs a probability of cancellation and a probability of non-cancellation when the input data is input. Note that a neural network, deep learning, or the like can be adopted for the machine learning model 15.

The input data DB 16 is a database that stores data to be input to the machine learning model 15 and is the input data to be determined. Describing the above-described carrier as an example, each input data stored in the input data DB 16 is data having a feature of the member to be determined as to whether or not to cancel.

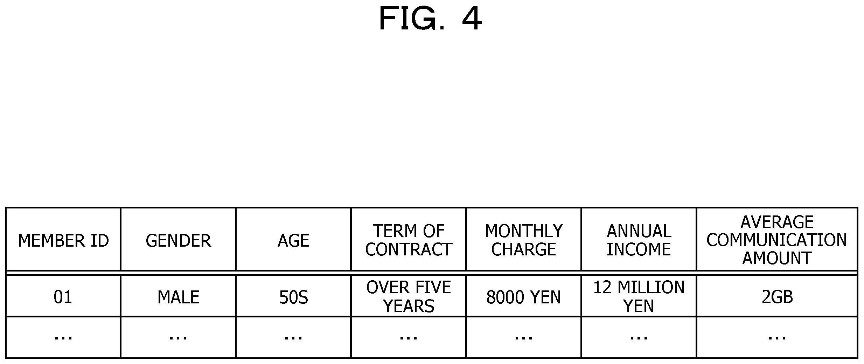

FIG. 4 is a diagram illustrating an example of information stored in the input data DB 16. As illustrated in FIG. 4, each input data stored in the input data DB 16 has "member ID, gender, age, term of contract, monthly charge, annual income, and average communication amount". Here, each of the "gender, age, term of contract, monthly charge, annual income, and average communication amount" is a feature. Note that, since description of each feature is similar to that in FIG. 3, detailed description is omitted. In the example of FIG. 4, in the data of the member with the member ID = 01, "a male, 50s, over 5 years, the monthly charge of 8000 yen, the annual income of 12 million yen, and an average of 2 GB" is set as the features.

The control unit 20 is a processing unit that controls the entire information processing device 10, and includes a machine learning unit 21, a prediction unit 22, an explanation execution unit 23, and a display control unit 24.

The machine learning unit 21 generates the machine learning model 15, using each training data stored in the training data DB 14. For example, the machine learning unit 21 trains the machine learning model 15 by supervised learning using the training data. Describing the example of FIG. 3, the machine learning unit 21 acquires the training data of the member ID from the training data DB 14, and inputs the features such as the gender into the machine learning model 15. Then, the machine learning unit 21 executes machine learning of the machine learning model 15 so that an error between an output value of the machine learning model 15 and the label "continuation (no cancellation)" becomes small.

The prediction unit 22 executes prediction using the machine learning model 15 for each input data stored in the input data DB 16. Describing the above-described example, the prediction unit 22 acquires the input data with the member ID of 01 from the input data DB 16 and inputs the features such as the gender into the machine learning model 15. Then, the prediction unit 22 predicts whether the member with the member ID = 01 cancels the contract, using an output result of the machine learning model 15. Note that the prediction unit 22 displays a prediction result on the output unit 12 and stores the prediction result in the storage unit 13.

The explanation execution unit 23 generates explanatory information that the user can confirm for the prediction results by the prediction unit 22. For example, the explanation execution unit 23 acquires the contribution of each of a plurality of factors included in each of a plurality of input data to the output result of the machine learning model 15 in the case of inputting each of the plurality of input data. Then, the explanation execution unit 23 clusters the plurality of input data on the basis of the contribution of each of the plurality of factors. Thereafter, the explanation execution unit 23 generates, for each of a plurality of groups generated by the clustering, the explanatory information including a diagram representing the magnitude (weight) of the contribution of each of the plurality of factors to the output result in the case of inputting the input data included in the group.

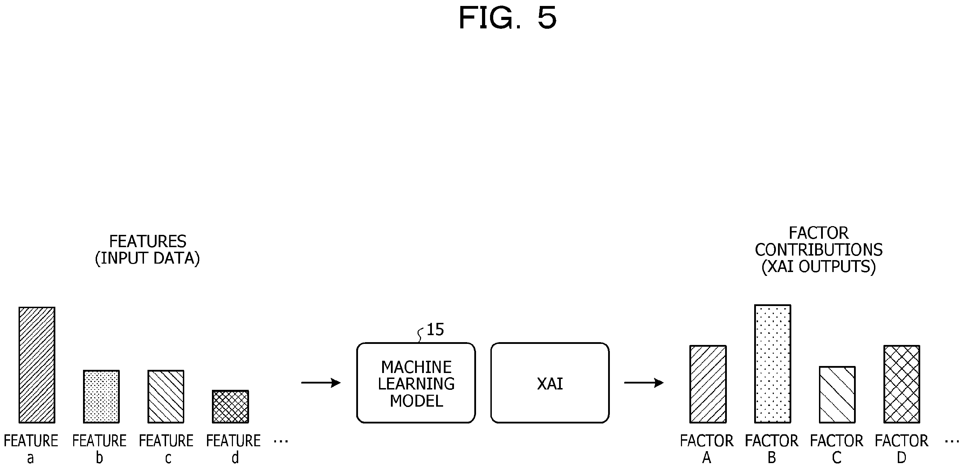

First, the explanation execution unit 23 acquires the factor contribution using each input data, the prediction result, and XAI. FIG. 5 is a diagram for describing acquisition of the factor contribution. As illustrated in FIG. 5, the explanation execution unit 23 inputs the input data having the feature a, the feature b, the feature c, and the feature d into the machine learning model 15 and acquires the prediction results. Then, the explanation execution unit 23 generates pieces of neighborhood data in which the features of the input data are variously changed, inputs the pieces of neighborhood data to the machine learning model 15, and acquires prediction results.

Next, the explanation execution unit 23 inputs the input data and the prediction results, the pieces of neighborhood data and the prediction results to XAI, and generates an explainable model (linear regression model) that locally approximates the complex machine learning model 15 using the input data and the neighborhood data. Then, the explanation execution unit 23 acquires the contributions of the factor A corresponding to the feature a, the factor B corresponding to the feature b, the factor C corresponding to the feature c, and the factor D corresponding to the feature d by calculating partial regression coefficients of the linear regression model.

In this way, the explanation execution unit 23 acquires the prediction result and the factor contribution for each of N pieces of input data. Note that the acquisition of the factor contribution using XAI is not limited to the above-described processing, and a known method such as an algorithm of LIME can be adopted.

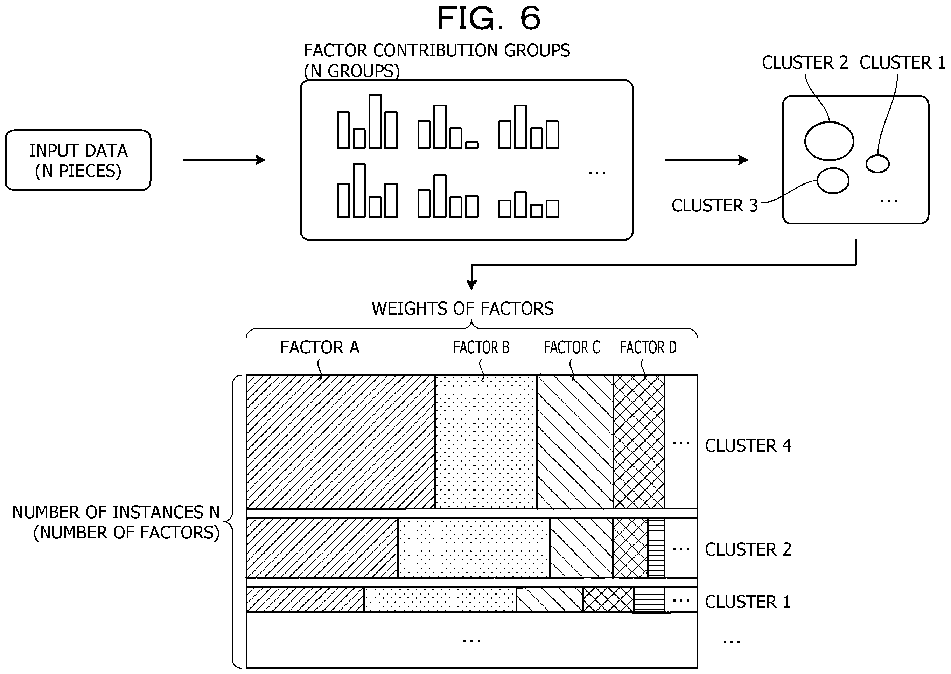

Next, the explanation execution unit 23 clusters the input data using the factor contributions, and calculates the weights of the factors in the cluster for each cluster. FIG. 6 is a diagram for describing calculation of weights of factors. As illustrated in FIG. 6, the explanation execution unit 23 maps N factor contribution groups for the respective N pieces of input data in the four-dimensional feature space having the feature a, the feature b, the feature c, and the feature d as axes. For example, the explanation execution unit 23 maps the respective pieces of input data to a position in the feature space specified by the factor vector having the contribution of the factor A, the contribution of the factor B, the contribution of the factor C, and the contribution of the factor D, as vectors.

Thereafter, the explanation execution unit 23 clusters the input data in the feature space to generate a cluster 1, a cluster 2, a cluster 3, and the like. Then, the explanation execution unit 23 generates the weights of the factors in each cluster. For example, the explanation execution unit 23 acquires the factor contributions of the pieces of input data belonging to the cluster 4, which is an example of a first group, and calculates a total amount of the contributions of the factor A, a total amount of the contributions of the factor B, a total amount of the contributions of the factor C, and a total amount of the contributions of the factor D. Then, the explanation execution unit 23 calculates the proportion of the factor A, the proportion of the factor B, the proportion of the factor C, and the proportion of the factor D occupied in the cluster 4.

In this way, the explanation execution unit 23 expresses the proportion (weight) occupied by each factor in each cluster by the area ratio, generates the explanatory information including the diagram sorted by each of the area ratio, outputs the explanatory information to the display control unit 24, stores the explanatory information in the storage unit 13, and outputs the explanatory information to the output unit 12.

The display control unit 24 visualizes the explanatory information generated by the explanation execution unit 23 and outputs and displays the explanatory information on the output unit 12. For example, the display control unit 24 outputs and displays subdivided information of the cluster by mapping the instances in the cluster with the features as axes.

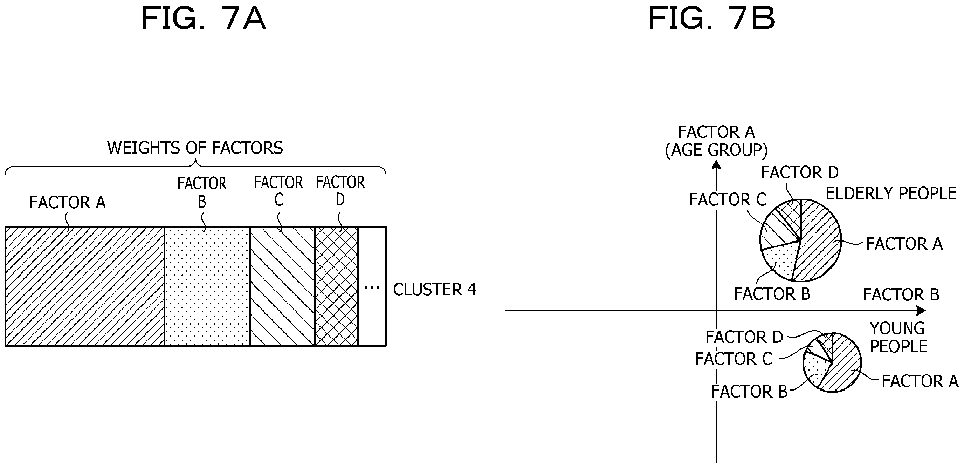

FIG. 7A and FIG. 7B are diagrams for describing a display example of the explanatory information. As illustrated in FIG. 7A and FIG. 7B, the display control unit 24 displays a diagram illustrating the weights of the factors in the cluster 4 generated by the explanation execution unit 23 (FIG. 7A) and a diagram in which the cluster 4 is subdivided (FIG. 7B) together. Here, FIG. 7A is a diagram illustrating the weights of the factors generated by the method described with reference to FIG. 6. FIG. 7B is a diagram generated by the display control unit 24. For example, the display control unit 24 maps the input data in a two-dimensional space having, as axes, the factor A (age group) and the factor B (annual income) that are specified factors specified by the user among the factors in the cluster 4, using the factor A and the factor B of the input data in the cluster 4 as vectors (factor vectors). Then, the display control unit 24 generates a pie chart representing the number of each of the plurality of factors included in the input data.

More specifically, the display control unit 24 calculates a total value of the factor contributions of the factors for the input data corresponding to elderly people whose age is older than a threshold value among the input data in the cluster 4, and generates proportions of the factors using the total value of the factor contributions of the factors as a pie chart. Similarly, the display control unit 24 calculates a total value of the factor contributions of the factors for the input data corresponding to young people whose age is less than a threshold value, and generates and displays proportions of the factors using the total value of the factor contributions of the factors as a pie chart. In the pie chart, the area of the circle represents the number of instances in the cluster.

As a result, the display control unit 24 can present the explanatory information in which the cluster is subdivided by mapping the instances in the cluster with the features as axes for the cluster clustered from the factor contributions. For example, since the cluster is clustered according to the factor contributions, the actual features may differ even if the factor contributions are close. Taking a case of withdrawal prediction as an example, considering a case where the factor A with a high factor contribution is the age group, there is a difference in average annual income or the like between the young people and the elderly people, but there is no difference in the factor contribution such as the monthly fee or the like. For the above example, the display control unit 24 generates and displays the subdivided information of the cluster, so that the difference in the factor contribution of the feature having a not high factor contribution becomes clear, and the user can visually recognize the difference.

That is, there is a possibility that users having similar factor contributions are clustered in the same cluster, but differences may occur in the actual features, so the differences may not be able to be read only from FIG. 7A. Furthermore, in a case where selection of the number of clusters is not appropriate, the tendency of the factor contributions may be different even within the same cluster such as the factor A (age group) of the user A being "the factor contribution = 0.5 and a real value of the feature = 60s", and the factor A (age group) of the user B being "the factor contribution = 0.5 and a real value of the feature = 20s".

Even in this case, as illustrated in FIG. 7B generated by the display control unit 24, when the cluster is divided into two clusters according to the age group, in a case where there is a difference in the average annual income or a family configuration between the young people and the elderly people, the difference in the tendency is subtly visualized in the features with lower factor contributions, and the user can subdivide and confirm the cluster. Furthermore, the user can also confirm the tendency of actual values of the features of the factor A (age group) that cannot be confirmed only by the graph of FIG. 7A.

As another example, the display control unit 24 more concretely visualizes the features of the overall tendency by mapping each cluster according to the axes of the features.

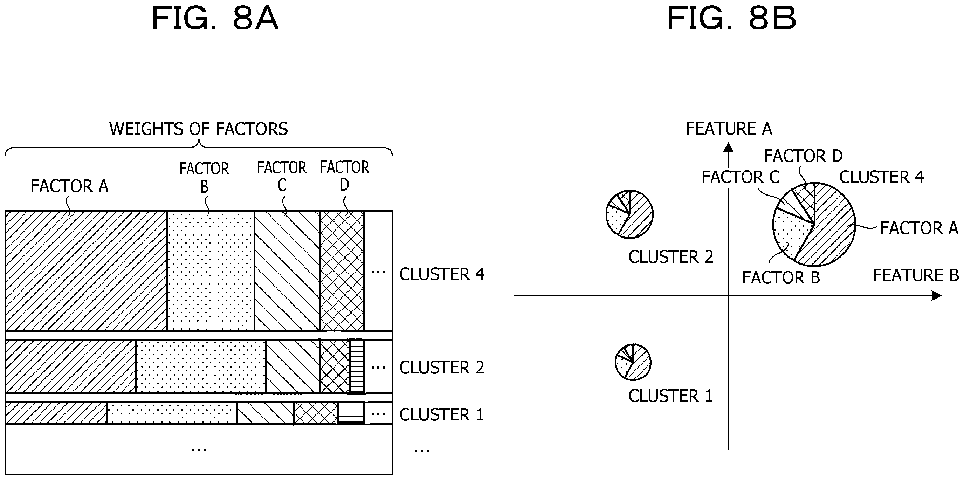

FIG. 8A and FIG. 8B are diagrams for describing a display example of the explanatory information. As illustrated in FIG. 8A and FIG. 8B, the display control unit 24 displays a diagram illustrating the weights of the factors in the cluster 4 generated by the explanation execution unit 23 (FIG. 8A) and mapping results of the clusters (FIG. 8B) together. Here, FIG. 8A is a diagram illustrating the weights of the factors generated by the method described with reference to FIG. 6. FIG. 8B is a diagram generated by the display control unit 24.

For example, the display control unit 24 generates the weights of the factors as a pie chart, for each cluster. Then, the display control unit 24 maps the pie charts corresponding to the respective clusters to the two-dimensional space of the feature A and the feature B. Specifically, the display control unit 24 calculates a total value of the factor contributions of the factors for the input data having the feature A and the feature B that are equal to or larger than the threshold value among the input data in the cluster 1, and generates the proportions of the factors using the total value of the factor contributions of the factors as a pie chart. Similarly, the display control unit 24 calculates a total value of the factor contributions of the factors for the input data having the feature A and the feature B that are less than the threshold value among the input data in the cluster 2, and generates the proportions of the factors using the total value of the factor contributions of the factors as a pie chart.

As a result, the user can confirm the cluster having many features for which the user wants to take measures in the case of withdrawal prediction, such as the term of contract, age group, and gender, and can easily take measures. As the feature to be used as an axis, a feature having a high factor contribution may be adopted, or the user can arbitrarily select the feature.

For example, in the graph illustrated in FIG. 8A, the tendency of the factor contributions of each cluster can be confirmed, but the actual value of the feature of each factor and how many users are included in each cluster is difficult to visually confirm. In contrast, according to the pie charts illustrated in FIG. 8B generated by the display control unit 24, the user can easily visually recognize that there are many users in the cluster 4 who are old in the age group and have a long term of contract, or the cluster 4 has many users whereas the cluster 1 has fewer users.

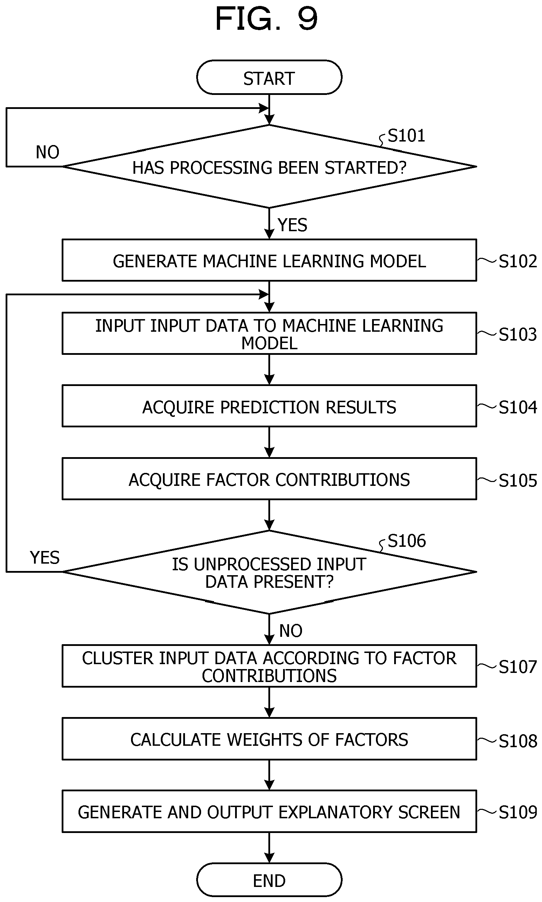

FIG. 9 is a flowchart illustrating a flow of processing according to the first embodiment. As illustrated in FIG. 9, when processing start is instructed (S101: Yes), the control unit 20 of the information processing device 10 generates the machine learning model 15 using the training data (S102).

Next, the control unit 20 of the information processing device 10 inputs the input data to the machine learning model 15 (S103), acquires the prediction results (S104), and acquires the factor contributions using XAI or the like (S105). Here, in a case where unprocessed input data is present (S106: Yes), the control unit 20 returns to S103 and executes the subsequent processing for the next input data.

On the other hand, in a case where unprocessed input data is not present (S106: No), the control unit 20 clusters the input data using the factor contributions (S107). Then, the control unit 20 calculates the weights of the factors for each clustered cluster (S108), generates an explanation screen for displaying the explanatory information, and outputs the explanatory screen (S109).

As described above, the information processing device 10 can classify the prediction results (instances) into clusters and output the prediction results (instances) as proportions of the factor contributions to each cluster. As a result, when confirming the prediction results, the user can confirm the prediction results according to the order of the displayed factor contributions, so the user can grasp the tendency of the overall prediction results.

Furthermore, in a case where clustering is performed for the features that are inputs for prediction, the weights of the respective features are equal. However, since the information processing device 10 clusters the features with the vector of the factor contribution, each feature can be weighted according to the factor contribution. As a result, the information processing device 10 can display the prediction results in the cluster in association with the tendency of the factor contributions, and can improve the visibility of the user.

The data example, the number of clusters, the feature, the number of features, the factor, the graph example, the screen example, and the like used in the above-described embodiment are merely examples and can be arbitrarily changed. Note that the cluster is an example of a group. Furthermore, as an example of the magnitude of the factor contribution, the area, the weight, and the like are exemplified, but the present embodiment is not limited to the example. For example, indexes such as a numerical value, and a total value and an average value in the cluster can also be used. Furthermore, the axes of the feature described in FIGs. 7 and 8 can also be arbitrarily changed.

Furthermore, in the above-described embodiment, the cancellation of the carrier has been described as an example, but the present embodiment is not limited to the example. For example, the information processing device 10 can be applied to various analyzes such as suspicious person detection using sound data and image data.

Pieces of information including a processing procedure, a control procedure, a specific name, various types of data, and parameters described above or illustrated in the drawings may be also changed in any ways unless otherwise specified.

Furthermore, specific forms of distribution and integration of configuration elements of individual devices are not limited to those illustrated in the drawings. For example, the explanation execution unit 23 and the display control unit 24 may be integrated. For example, all or some of the configuration elements may be also configured by being functionally or physically distributed or integrated in optional units according to various types of loads, usage situations, or the like. Moreover, all or some of individual processing functions of each device may be implemented by a central processing unit (CPU) and a program analyzed and executed by the CPU, or may be implemented as hardware by wired logic.

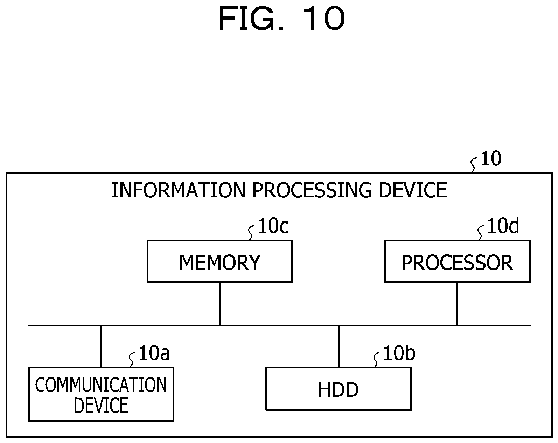

FIG. 10 is a diagram for describing a hardware configuration example. As illustrated in FIG. 10, the information processing device 10 includes a communication device 10a, a hard disk drive (HDD) 10b, a memory 10c, and a processor 10d. Furthermore, the individual units illustrated in FIG. 10 are mutually connected by a bus or the like. Note that the information processing device 10 may have a display, a touch panel, and the like.

The communication device 10a is a network interface card or the like, which communicates with another device. The HDD 10b stores programs and databases (DBs) for operating the functions illustrated in FIG. 2.

The processor 10d reads a program that executes processing similar to the process of each processing unit illustrated in FIG. 2 from the HDD 10b or the like, and develops the read program in the memory 10c, thereby activating a process that performs each function described with reference to FIG. 2 or the like. For example, this process executes a function similar to the function of each processing unit included in the information processing device 10. For example, the processor 10d reads a program having similar functions to the machine learning unit 21, the prediction unit 22, the explanation execution unit 23, the display control unit 24, and the like from the HDD 10b or the like. Then, the processor 10d executes a process of executing processing similar to the machine learning unit 21, the prediction unit 22, the explanation execution unit 23, the display control unit 24, and the like.

As described above, the information processing device 10 operates as an information processing device that executes an explanatory information output method by reading and executing the program. Furthermore, the information processing device 10 may also implement functions similar to the functions of the above-described embodiments by reading the program described above from a recording medium by a medium reading device and executing the read program described above. Note that the program referred to in other embodiments is not limited to being executed by the information processing device 10. For example, the embodiments described above may be also similarly applied to a case where another computer or server executes the program or a case where these cooperatively execute the program.

This program may also be distributed via a network such as the Internet. Furthermore, this program may be recorded in a computer-readable recording medium such as a hard disk, flexible disk (FD), compact disc read only memory (CD-ROM), magneto-optical disk (MO), or digital versatile disc (DVD), and can be executed by being read from the recording medium by a computer.

## Claims

1. An explanatory information output program that causes at least one computer to execute a process, the process comprising:
obtaining a contribution of each of a plurality of factors to an output result of a machine learning model in a case of inputting each of a plurality of pieces of data, each of the plurality of factors being included in each of the plurality of pieces of data;
clustering the plurality of pieces of data based on the contribution of each of the plurality of factors to generate a plurality of groups of factors; and
outputting explanatory information that includes a diagram representing magnitude of the contribution of each of the plurality of factors to the output result in a case of inputting data included in the group for each of the plurality of groups.

2. The explanatory information output program according to claim 1, wherein the outputting includes:
acquiring a total value of the contribution of each of the plurality of factors to the output result of the data included in the group for each of the plurality of groups;
generating the diagram representing magnitude of the contribution of each of the plurality of factors based on the total value of the contribution of each of the plurality of factors included in the group for each of the plurality of groups; and
outputting the explanatory information that includes the diagram corresponding to each of the plurality of groups.

3. The explanatory information output program according to claim 2, wherein the outputting includes:
acquiring proportion of each of the plurality of factors in the group by using the total value of the contribution of each of the plurality of factors included in the group for each of the plurality of groups;
generating the diagram representing the proportion of each of the plurality of factors by area ratio for each of the plurality of groups; and
outputting the explanatory information that includes the diagram corresponding to each of the plurality of groups.

4. The explanatory information output program according to claim 3, wherein the outputting includes:
specifying data included in a first group among the plurality of groups by using a factor vector in a feature space that has a plurality of specified factors among the plurality of factors as axes; and
outputting the explanatory information that includes a pie chart representing the numbers of the plurality of factors included in the data, and the diagram corresponding to the first group.

5. The explanatory information output program according to claim 3, wherein the outputting includes:
specifying data included in the group for each of the plurality of groups by using a factor vector in a feature space that has a plurality of specified factors among the plurality of factors as axes;
generating a pie chart that representing the numbers of the plurality of factors included in the specified data for each of the plurality of groups; and
outputting the explanatory information that includes the diagram and the pie chart corresponding to each of the groups.

6. An explanatory information output method for a computer to execute a process comprising:
obtaining a contribution of each of a plurality of factors to an output result of a machine learning model in a case of inputting each of a plurality of pieces of data, each of the plurality of factors being included in each of the plurality of pieces of data;
clustering the plurality of pieces of data based on the contribution of each of the plurality of factors to generate a plurality of groups of factors; and
outputting explanatory information that includes a diagram representing magnitude of the contribution of each of the plurality of factors to the output result in a case of inputting data included in the group for each of the plurality of groups.

7. The explanatory information output method according to claim 6, wherein the outputting includes:
acquiring a total value of the contribution of each of the plurality of factors to the output result of the data included in the group for each of the plurality of groups;
generating the diagram representing magnitude of the contribution of each of the plurality of factors based on the total value of the contribution of each of the plurality of factors included in the group for each of the plurality of groups; and
outputting the explanatory information that includes the diagram corresponding to each of the plurality of groups.

8. The explanatory information output method according to claim 7, wherein the outputting includes:
acquiring proportion of each of the plurality of factors in the group by using the total value of the contribution of each of the plurality of factors included in the group for each of the plurality of groups;
generating the diagram representing the proportion of each of the plurality of factors by area ratio for each of the plurality of groups; and
outputting the explanatory information that includes the diagram corresponding to each of the plurality of groups.

9. The explanatory information output method according to claim 8, wherein the outputting includes:
specifying data included in a first group among the plurality of groups by using a factor vector in a feature space that has a plurality of specified factors among the plurality of factors as axes; and
outputting the explanatory information that includes a pie chart representing the numbers of the plurality of factors included in the data, and the diagram corresponding to the first group.

10. The explanatory information output method according to claim 8, wherein the outputting includes:
specifying data included in the group for each of the plurality of groups by using a factor vector in a feature space that has a plurality of specified factors among the plurality of factors as axes;
generating a pie chart that representing the numbers of the plurality of factors included in the specified data for each of the plurality of groups; and
outputting the explanatory information that includes the diagram and the pie chart corresponding to each of the groups.

11. An information processing device comprising:
a control unit configured to:
obtain a contribution of each of a plurality of factors to an output result of a machine learning model in a case of inputting each of a plurality of pieces of data, each of the plurality of factors being included in each of the plurality of pieces of data,
cluster the plurality of pieces of data based on the contribution of each of the plurality of factors to generate a plurality of groups of factors, and
output explanatory information that includes a diagram representing magnitude of the contribution of each of the plurality of factors to the output result in a case of inputting data included in the group for each of the plurality of groups.

12. The information processing device m according to claim 11, wherein the control unit is further configured to:
acquire a total value of the contribution of each of the plurality of factors to the output result of the data included in the group for each of the plurality of groups,
generate the diagram representing magnitude of the contribution of each of the plurality of factors based on the total value of the contribution of each of the plurality of factors included in the group for each of the plurality of groups, and
output the explanatory information that includes the diagram corresponding to each of the plurality of groups.

13. The information processing device according to claim 12, wherein the control unit is further configured to:
acquire proportion of each of the plurality of factors in the group by using the total value of the contribution of each of the plurality of factors included in the group for each of the plurality of groups,
generate the diagram representing the proportion of each of the plurality of factors by area ratio for each of the plurality of groups, and
output the explanatory information that includes the diagram corresponding to each of the plurality of groups.

14. The information processing device according to claim 13, wherein the control unit is further configured to:
specify data included in a first group among the plurality of groups by using a factor vector in a feature space that has a plurality of specified factors among the plurality of factors as axes, and
output the explanatory information that includes a pie chart representing the numbers of the plurality of factors included in the data, and the diagram corresponding to the first group.

15. The information processing device according to claim 13, wherein the control unit is further configured to:
specify data included in the group for each of the plurality of groups by using a factor vector in a feature space that has a plurality of specified factors among the plurality of factors as axes,
generate a pie chart that representing the numbers of the plurality of factors included in the specified data for each of the plurality of groups, and
output the explanatory information that includes the diagram and the pie chart corresponding to each of the groups.
